# EUROPÄISCHE PATENTSCHRIFT

(11) **EP 2 489 545 B1**
(45) Veröffentlichungstag und Bekanntmachung des Hinweises auf die Patenterteilung: **25.03.2015**
(21) Anmeldenummer: 11188116.5
(22) Anmeldetag: 07.11.2011
(51) Int. Cl.: B60N 2/42, B60N 2/427

(54) **Fahrzeugsitzaufnahme**
Vehicle seat holder
Réception de siège de véhicule

(43) Veröffentlichungstag der Anmeldung: 22.08.2012
(73) Patentinhaber: Metalsa Automotive GmbH, 51702 Bergneustadt (DE)
(72) Erfinder: Hellweg, Dr. Hans-Bernd, 53819 Neunkirchen-Seelscheid (DE); Kern, Alexander, 51597 Morsbach (DE)
(74) Vertreter: Rebbereh, Cornelia

(56) Entgegenhaltungen:
- WO-A1-2005/054004
- US-A1- 2001 011 830
- US-A1- 2007 273 186

## Beschreibung

Die Erfindung betrifft eine Fahrzeugsitzaufnahme, mit- einem mit einem Fahrzeugboden verbindbaren Grundkörper und - einem mit einem Fahrzeugsitz, insbesondere einem Schienenpaar eines Fahrzeugsitzes, bevorzugt einer Bodenschiene eines Fahrzeugsitzes verbindbaren Aufnahmekörper, - wobei der Aufnahmekörper in einer Normallage relativ gegenüber dem Grundkörper lösbar festgelegt ist. Eine derartige Fahrzeugsitzaufnahme ist aus der WO 2005/054004 A1 bekannt.

Kraftfahrzeugsitze, insbesondere PKW-Fahrzeugsitze werden üblicherweise über standardisierte, an den Fahrzeugsitzen angeordnete Schienenpaare mit dem Fahrzeugboden verbunden. Hierzu weisen die Fahrzeugböden in der Regel bereits entsprechende Befestigungspunkte, bspw. mit Gewinden versehene Bohrungen auf, die ein Anschrauben - bspw. der Unterschiene - der Schienenpaare der Fahrzeugsitze mittels geeigneter Befestigungsschrauben am Fahrzeugboden ermöglichen. Die Bodenschiene wird hierzu durch diese Verbindung ortsfest am Fahrzeug angeordnet. Eine Längsverstellung des Fahrzeugsitzes ist durch eine Verschiebung einer Sitzschiene gegenüber der Bodenschiene möglich, wobei im Betrieb des Fahrzeugs eine eingestellte Sitzposition gegenüber dem Fahrzeugboden festgelegt ist, so dass dann der Fahrzeugsitz weitestgehend starr über die bestehenden Verschraubungen mit dem Fahrzeugboden verbunden ist.

Die Ursachen für die bei einem Unfall auftretenden Verletzungen bei den Insassen der verunfallten Fahrzeuge sind grundsätzlich vielfältig. Eine mögliche Verletzungsursache ist der Kontakt der Insassen mit Fahrzeugbauteilen, welche vom Unfalltyp abhängig auch in Richtung auf die Insassen verformt werden, wie dies bei einem Seitenaufprall der Fall ist.

Darüber hinaus beklagen sich im Anschluss an Verkehrsunfälle die Fahrzeuginsassen der verunfallten Fahrzeuge häufig über ein sogenanntes Schleudertrauma, welche aus einer sich beim Fahrzeugaufprall ergebenden Beschleunigung und Überstreckung des Kopfes resultiert. Dabei sind hiervon insbesondere Fahrzeuginsassen betroffen, welche sich in einem Fahrzeug befinden, auf das ein anderes Fahrzeug im Heckbereich aufprallt.

Die das Schleudertrauma hervorrufenden Verletzungen resultieren dabei aus dem auch als Whiplash-Effekt beschriebenen Bewegungsablauf des Kopfes beim Unfall, wobei in Folge einer rückwärts gerichteten Bewegung eines Fahrzeuginsassen bei einem Heckaufprall zwar der Oberkörper durch die starre Rückenlehne abgefangen wird, der Kopf jedoch oberhalb des Nackens plötzlich abknickt, so dass es zu dem zuvor beschriebenen Schleudertrauma kommt.

Zur Verminderung der Unfallfolgen bspw. bei einem Seitenaufprall oder des Whiplash- oder Peitschenschlag-Effekts bei einem Heckaufprall existiert bereits eine Vielzahl von Lösungsansätzen. Neben der Verbesserung der Kopfstützen werden auch Systeme entwickelt, die durch geeignete Ausgestaltungen der Fahrzeugsitze die Verlagerbarkeit der Rückenlehne im Crashfall ermöglichen. Die Verlagerbarkeit der Rückenlehne soll dabei dazu dienen, über eine rückwärts gerichtete Bewegung der Rückenlehne den Körper aufzufangen und die crashinduzierte Bewegung sanft abzubremsen, um so die aus dem abrupten Abbremsen der Rückbewegung resultierenden Kopfbeschleunigung zu reduzieren. Die bekannten Systeme setzen jedoch am Fahrzeugsitz an und setzen eine umfangreiche und kostenintensive Ausgestaltung des Fahrzeugsitzes voraus, um eine im Crashfall bewegliche Anordnung, bspw. der Rückenlehne zu ermöglichen.

Hiervon ausgehend liegt der Erfindung die Aufgabe zugrunde, eine Fahrzeugsitzaufnahme zur Anordnung eines Fahrzeugsitzes an einem Fahrzeugboden sowie einen Fahrzeugboden bereitzustellen, welche eine definierte Bewegung des Fahrzeugsitzes ermöglichen.

Die Erfindung löst die Aufgabe durch eine Fahrzeugsitzaufnahme mit den Merkmalen des Anspruchs 1 sowie einen Fahrzeugboden mit den Merkmalen des Anspruchs 11. Vorteilhafte Weiterbildungen der Erfindung sind in den abhängigen Ansprüchen angegeben.

Kennzeichnend für die erfindungsgemäße Fahrzeugsitzaufnahme ist, dass diese eine Verstelleinheit aufweist, die derart ausgebildet und angeordnet ist, dass eine Aktivierung der Verstelleinheit eine Verlagerung des mit dem Fahrzeugsitz verbindbarenAufnahmekörpers relativ gegenüber dem mit dem Fahrzeugboden verbindbaren Grundkörper in Richtung auf eine Crashlage bewirkt.

Wesentlich für die erfindungsgemäße Fahrzeugsitzaufnahme ist, dass diese sich im normalen Fahrbetrieb des Kraftfahrzeugs in einer Normallage befindet, in der der Aufnahmekörper relativ gegenüber dem Grundkörper festgelegt ist, so dass der Fahrzeugsitz starr am Fahrzeugboden angeordnet ist. Insofern ergeben sich bei einer Verwendung der erfindungsgemäßen Fahrzeugsitzaufnahme im Betrieb keinerlei Änderungen der Gebrauchseigenschaften gegenüber starr mit dem Fahrzeugboden verbundenen Fahrzeugsitzen.

Im Falle eines Heckaufpralls liegt der Erfindung die Erkenntnis zugrunde, dass durch eine definierte Bewegung des Fahrzeugsitzes bei oder kurzzeitig vor einem Crash das Verletzungsrisiko der Halswirbelsäule deutlich reduziert werden kann. Die erfindungsgemäße Fahrzeugsitzaufnahme verfolgt dabei den Ansatz, den Fahrzeugsitz und somit auch die auf dem Fahrzeugsitz angeordnete Person vor einer durch den insbesondere Heckaufprall hervorgerufene Bewegung in die entgegengesetzte Richtung, nämlich - bezogen auf die Einbaulage des Fahrzeugsitzes - nach vorne zu beschleunigen, obgleich die Fahrzeugsitzaufnahme grundsätzlich auch dazu verwendet werden könnte, den Fahrzeugsitz in Richtung auf das Fahrzeugheck zu kippen.

Auch besteht mittels der erfindungsgemäßen Fahrzeugsitzaufnahme die Möglichkeit, den Fahrzeugsitz kurz vor oder bei einem Seitenaufprall um eine Fahrzeuglängsachse zu kippen, wodurch eine auf dem Fahrzeugsitz angeordnete Person in Richtung der Fahrzeugmitte bewegt wird, wodurch das Risiko des Kontakts mit seitlichen Fahrzeugbauteilen verringert wird.

Ein wesentliches Merkmal der erfindungsgemäßen Fahrzeugsitzaufnahme ist daher, dass der Aufnahmekörper lösbar an dem Grundkörper festgelegt ist. Somit besteht die Möglichkeit, nach einer Freigabe des Aufnahmekörpers durch eine Aktivierung der Verstelleinheit eine Verlagerung des Aufnahmekörpers relativ gegenüber dem Grundkörper in Richtung auf eine Crashlage zu bewirken, in der der Aufnahmekörper gegenüber dem Grundkörper eine von der Normallage abweichende Position aufweist. Die Verstelleinheit bewirkt somit in erfindungsgemäßer Weise, dass aufgrund der sich durch eine Aktivierung ergebenden Verlagerung des Aufnahmekörpers gegenüber dem Grundkörper eine Verlagerung des Fahrzeugsitzes relativ gegenüber dem Fahrzeugboden stattfindet. Die Orientierung der Verlagerungsbewegung des Aufnahmekörpers gegenüber dem Grundkörper kann dabei grundsätzlich frei gewählt werden. Insofern können Fahrzeugsitzaufnahmen gebildet werden, welche im Crashfall oder kurz vor einem Unfall (Pre-Crash), erfassbar durch geeignete Sensoren, den Fahrzeugsitz gegenüber dem Fahrzeugboden verstellen.

Um nur die Unfallfolgen bei einem Heckaufprall zu verkleinern, können zur Anbindung des Fahrzeugsitzes in dessen vorderen Bereich am Fahrzeugboden bspw. solche Fahrzeugsitzaufnahmen verwendet werden, welche bei einer Aktivierung der Verstelleinheit ein Absenken des vorderen Fahrzeugsitzbereiches bewirken. Die Fahrzeugsitzaufnahmen können auch derart ausgestaltet sein, dass sie im Falle deren Verwendung zur Anbindung der hinteren Bereiche eines Fahrzeugsitzes eine Anhebung dieser Bereiche bewirken. Auch können zur Anbindung des Fahrzeugsitzes im vorderen Bereich die den Fahrzeugsitz im Crashfall/Pre-Crahsfall absenkende und gleichzeitig im hinteren Fahrzeugsitzbereich die den Fahrzeugsitz im Crashfall/Pre-Crashfall anhebende Fahrzeugsitzaufnahme verwendet werden.

Um nur die Unfallfolgen eines Seitenaufpralls zu verringern, kann der Fahrzeugsitz mit diesen im Crashfall außen anhebenden und/oder innen absenkenden Fahrzeugsitzaufnahmen verwendet werden. Um sowohl bei einem Heckaufprall als auch bei einem Seitenaufprall eine entsprechende Verlagerung der Sitze zu bewirken, können Fahrzeugsitzaufnahmen verwendet werden, die sowohl ein Anheben als auch ein Absenken des Fahrzeugsitzes bewirken können, wobei die Wirkrichtung durch eine entsprechende sensorgesteuerte Aktivierung festgelegt wird.

In allen dargestellten Ausführungsbeispielen bewirkt eine Aktivierung der Verstelleinheit somit eine Verlagerung der Sitzfläche und der relativ gegenüber der Sitzfläche festgelegten Rückenlehne. Bei einer Verlagerung der Rückenlehne in Fahrtrichtung, wird eine auf dem Fahrzeugsitz angeordnete Person in Fahrzeugrichtung beschleunigt. Eine entsprechende Beschleunigung kann dazu genutzt werden, um die durch einen Heckaufprall wirkende, entgegengesetzte Beschleunigung auszugleichen, so dass im Idealfall bei betragsmäßig gleicher Beschleunigung die durch den Heckaufprall entstehende Beschleunigung durch die zuvor durch die Fahrzeugsitzaufnahme bewirkte Beschleunigung ausgeglichen wird. Eine Aktivierung der Fahrzeugsitzaufnahme erfolgt über geeignete Steuermittel, welche mit Sensoren verbunden sind, die einen Crash detektieren. Auch besteht die Möglichkeit einer Aktivierung der Fahrzeugsitzaufnahme vor einem eigentlichen Kontakt mit einem Unfallgegner, wobei hierzu Sensoren genutzt werden, welche den zu erwartenden Aufprall erkennen. Durch eine derartige Pre-Crash-Aktivierung kann die durch die Fahrzeugsitzaufnahme erzeugte Wirkung in ergänzender Weise gesteigert werden.

Wesentlich für die Funktion der erfindungsgemäßen Fahrzeugsitzaufnahme ist, dass der Grundkörper in der Normallage relativ gegenüber dem Aufnahmekörper lösbar festgelegt ist, so dass zum einen im Normalbetrieb keine Beeinträchtigung gegenüber starr mit dem Fahrzeugboden verbundenen Fahrzeugsitzen besteht und zum anderen im Falle einer Aktivierung einer Verstelleinheit gewährleistet ist, dass eine Verlagerung des Aufnahmekörpers gegenüber dem Grundkörper stattfindet. Eine Festlegung des Aufnahmekörpers in der Normallage kann dabei grundsätzlich in beliebiger Weise erfolgen. Denkbar ist bspw. eine stoffschlüssige Verbindung, welche derart ausgebildet ist, dass sie durch eine Aktivierung der Verstelleinheit aufgebrochen wird, so dass eine Verlagerung des Aufnahmekörpers gegenüber dem Grundkörper stattfinden kann.

Nach einer besonders vorteilhaften Ausgestaltung der Erfindung ist jedoch vorgesehen, dass der Aufnahmekörper in der Normallage über eine kraft- und/oder formschlüssig wirkende Verbindung an den Grundkörper festgelegt ist. Die kraft- und/oder formschlüssig wirkende Verbindung erlaubt eine besonders einfache Ausgestaltung der Erfindung, wonach der Aufnahmekörper erst im Crashfall oder Pre-Crashfall gegenüber dem Grundkörper verschoben wird. Eine kraft- und/oder formschlüssig wirkende Verbindung lässt sich dabei in besonders einfacher Weise auflösen, so dass bei einer Aktivierung der Verstelleinheit unmittelbar eine Verlagerung des Aufnahmekörpers gegenüber dem Grundkörper erfolgen kann, in Folge dessen dann entsprechend der Ausgestaltung der Fahrzeugsitzaufnahme und dem Anordnungspunkt der Fahrzeugsitz verlagert, bspw. bei einem Heckaufprall im hinteren Bereich angehoben und/oder im vorderen Bereich abgesenkt wird.

Die Ausgestaltung der formschlüssigen Verbindung zwischen dem Grundkörper und dem Aufnahmekörper ist ebenfalls grundsätzlich frei wählbar. Nach einer besonders vorteilhaften Ausgestaltung der Erfindung ist jedoch vorgesehen, dass in der Normallage ein verlagerbares, mit dem Aufnahmekörper und dem Grundkörper in Eingriff befindliches Sperrelement die Position des Aufnahmekörpers gegenüber dem Grundkörper sichert. Die Verwendung eines Sperrelements ermöglicht eine besonders einfache Lagesicherung des Aufnahmekörpers gegenüber dem Grundkörper in der Normallage, wobei in der Normallage das Sperrelement mit beiden Körpern in Eingriff befindlich ist. Zur Verlagerung des Aufnahmekörpers gegenüber dem Grundkörper ist es lediglich erforderlich, das Sperrelement mit einem oder beiden Körpern außer Eingriff zu bringen, bzw. in eine Position zu verstellen, in der dann eine Verstellung des Aufnahmekörpers gegenüber dem Grundkörper erfolgen kann. Eine Verlagerung des Sperrelements kann dabei durch eine Aktivierung der Verstelleinheit herbeigeführt werden, welche entsprechend ausgestaltet sein kann und die dann auch eine Verlagerung des Aufnahmekörpers bewirkt.

Gemäß einer weiteren, besonders vorteilhaften Ausgestaltung des eine kraft- und/oder formschlüssige Verbindung herstellenden Sperrelements weist dieses eine Sollbruchstelle auf, über welche der Aufnahmekörper und der Grundkörper bei Anforderung durch eine bereitgestellte Aktuatorkraft gezielt voneinander getrennt werden. In Lastfällen ohne Crashrelevanz ist diese Verbindung über das Sperrelement dauerfest.

Die zur Verlagerung des Aufnahmekörpers gegenüber dem Grundkörper nach Auflösung der gegeneinander bestehenden Festlegung erforderliche Antriebsenergie kann grundsätzlich in beliebiger Weise bereitgestellt werden. Nach einer besonders vorteilhaften Ausgestaltung der Erfindung ist jedoch vorgesehen, dass der Aufnahmekörper in der Normallage in Richtung auf eine Crashlage vorgespannt ist, so dass durch eine Auflösung der Festlegung im Rahmen einer Aktivierung der Verstelleinheit die bestehende Vorspannung eine Verlagerung des Aufnahmekörpers in Vorspannrichtung bewirkt. Die Vorspannung kann dabei durch beliebige vorgespannte Federelemente bspw. auch durch elastisch vorverformte Kunststoffkörper erreicht werden.

Die Ausgestaltung der Verstelleinheit derart, dass deren Aktivierung eine Freigabe des Aufnahmekörpers gegenüber dem Grundkörper bewirkt ist grundsätzlich beliebig ausgestaltbar. Nach einer besonders vorteilhaften Ausgestaltung der Erfindung ist jedoch vorgesehen, dass die Verstelleinheit eine elektromagnetisch und/oder pyrotechnisch wirkende Betätigungseinheit aufweist, mittels der das gemäß einer vorteilhaften Weiterbildung der Erfindung vorgesehene Sperrelement mit dem Grundkörper und/oder dem Aufnahmekörper außer Eingriff bringbar ist, bzw. das Sperrelement in eine Position verlagert ist, in der eine Verstellung des Aufnahmekörpers gegenüber dem Grundkörper erfolgen kann. Diese Ausgestaltung der Verstelleinheit mit einer Betätigungseinheit ermöglicht eine besonders schnelle Verlagerung des Aufnahmekörpers in Richtung auf seine Crashlage, da mittels der elektromagnetisch und/oder pyrotechnisch wirkenden Betätigungseinheit eine schnelle Verlagerung des Sperrelements in eine Position erreicht werden kann, in der der Aufnahmekörper gegenüber dem Grundkörper verschiebbar ist.

Wie bereits an obiger Stelle dargestellt, kann die zur Verlagerung des Aufnahmekörpers erforderliche Energie in beliebiger Weise bereitgestellt werden. Alternativ oder ergänzend zu der nach einer vorteilhaften Weiterbildung der Erfindung vorgesehenen Vorspannung des Aufnahmekörpers in Richtung auf die Crashlage ist nach einer weiteren Ausgestaltung der Erfindung vorgesehen, dass die Verstelleinheit einen pyrotechnisch wirkenden Aktuator aufweist, wobei eine Aktivierung des Aktuators aufgrund einer sich in einem Arbeitsraum einstellenden Druckerhöhung eine Verlagerung des Aufnahmekörpers gegenüber dem Grundkörper bewirkt. Die Verwendung eines pyrotechnischen Aktuators zeichnet sich dabei dadurch aus, dass diese eine besonders schnelle Verlagerung des Aufnahmekörpers bewirkt, wodurch eine schnelle Verstellung des Fahrzeugsitzes erreicht werden kann. Die Verlagerung erfolgt dabei aufgrund einer sich in einem Arbeitsraum einstellenden Druckerhöhung, aufgrund der der Aufnahmekörper gegenüber dem Grundkörper verstellt wird.

Nach einer besonders vorteilhaften Weiterbildung der Erfindung ist vorgesehen, dass der pyrotechnische Aktuator auch dazu genutzt wird, das Sperrelement mit dem Grundkörper und/oder dem Aufnahmekörper außer Eingriff zu bringen, bzw. das Sperrelement in eine Position zu verlagern, in der der Aufnahmekörper gegenüber dem Grundkörper verstellbar ist. Gemäß dieser Weiterbildung der Erfindung kann auf eine separate Betätigungseinheit zur Verlagerung des Sperrelements in eine Position, in der der Aufnahmekörper gegenüber dem Grundkörper verschiebbar ist, verzichtet werden. Diese Ausgestaltung zeichnet sich ferner dadurch aus, dass es innerhalb kürzester Zeit nach der Aktivierung des pyrotechnischen Aktuators zu einer Verlagerung des Aufnahmekörpers gegenüber dem Grundkörper kommt.

Die erfindungsgemäße Fahrzeugsitzaufnahme zeichnet sich dadurch aus, dass durch eine Aktivierung eine Verlagerung des Fahrzeugsitzes, im Falle eines Heckaufpralls insbesondere der Rückenlehne, bewirkt wird. Bei einem Heckaufprall wird eine auf dem Fahrzeugsitz angeordnete Person in Fahrzeuglängsachsenrichtung betrachtet nach vorne beschleunigt. Hierdurch kann die durch einen Heckaufprall erzeugte Beschleunigung, welche in der Regel im Wesentlichen entgegengesetzt gerichtet ist, ausgeglichen werden. Nach einer weiteren Ausgestaltung der Erfindung ist vorgesehen, dass der bereits in Richtung auf die Crashlage verlagerte Aufnahmekörper unter elastischer und/oder plastischer Verformung eines Absorptionselements in Richtung auf die Normallage verlagerbar ist. Gemäß dieser Ausgestaltung der Erfindung ist vorgesehen, dass der bereits verlagerte Aufnahmekörper die Möglichkeit bietet, den Fahrzeugsitz dann wieder entgegen der bei einer Verlagerung des Aufnahmekörpers in Richtung auf die Crashlage erfolgten Bewegung zu verstellen.

Im Falle einer - bezogen auf die Einbaulage - Anordnung im Bereich der vorderen Sitzenden des Fahrzeugsitzes ermöglichen die entsprechend weitergebildeten Fahrzeugsitzaufnahmen somit bei einem Heckaufprall nach einem zuvor erfolgten Absenken des vorderen Sitzbereichs anschließend eine entgegengesetzte Bewegung, nämlich ein Anheben des vorderen Sitzbereichs, wobei durch die dabei stattfindende elastische und/oder plastische Verformung eines Absorptionselements bestehende Crashenergie im Rahmen einer gedämpften Bewegung der Rückenlehne abgebaut werden kann, wodurch eine plötzliche Überstreckung des Kopfes vermindert und somit Verletzungen reduziert werden. Im Falle der Verwendung von Fahrzeugsitzaufnahmen zur Befestigung des - bezogen auf die Einbaulage - hinteren Sitzendes des Fahrzeugsitzes erlauben die gemäß dieser Ausgestaltung der Erfindung ausgebildeten Fahrzeugsitzaufnahmen nach einem Heckaufprall ein Absenken des hinteren Sitzbereichs nach einer zuvor erfolgten Anhebebewegung.

Die konkrete Ausgestaltung des Grundkörpers sowie des Aufnahmekörpers ist grundsätzlich frei wählbar, sofern gewährleistet ist, dass diese im Crashfall oder Pre-Crashfall nach einer Auflösung der dieser aneinander festlegenden Verbindung relativ zueinander verlagerbar sind. Nach einer besonders vorteilhaften Ausgestaltung der Erfindung sind der Grundkörper durch eine am Fahrzeugboden anordbaren Hülse und der Aufnahmekörper durch ein gegenüber der Hülse verlagerbares Verbindungselement, insbesondere ein Kolbenelement gebildet. Eine entsprechende Ausgestaltung der Fahrzeugsitzaufnahme lässt sich besonders einfach und kostengünstig sowie besonders bauraumsparsam herstellen, so dass nur ein geringer Bereich im Fahrzeugboden beansprucht wird. Im Crashfall oder Pre-Crashfall erfolgt eine Verlagerung der als Kolbenelement ausgebildeten Hülse.

Gemäß einer weiteren Ausgestaltung der Erfindung ist vorgesehen, dass die Verbindung des Aufnahmekörpers mit dem Grundkörper derart ausgebildet ist, dass der in Richtung auf die Crashlage verschobene Aufnahmekörper gegen eine Rückverlagerung in Richtung auf die Normallage gesichert ist. Gemäß dieser Ausgestaltung der Erfindung erfolgt nach einer Aktivierung der Verstelleinheit und einer Verlagerung des Aufnahmekörpers gegenüber dem Grundkörper in der sich dann einstellenden Lage eine Festlegung des Aufnahmekörpers gegenüber dem Grundkörper, wodurch die sich nach der Aktivierung der Fahrzeugsitzaufnahme einstellende Position des Fahrzeugsitzes fixiert wird. Die sich durch die Aktivierung der Fahrzeugsitzaufnahme einstellende Position der Rückenlehne kann durch diese Ausgestaltung der Erfindung nach Aktivierung der Fahrzeugsitzaufnahme beibehalten werden.

Kennzeichnend für den erfindungsgemäßen Fahrzeugboden ist, dass die Mittel mit denen der Fahrzeugsitz befestigt ist, durch eine Fahrzeugsitzaufnahme gemäß einem der Ansprüche 1-11 gebildet ist. Ein entsprechender Fahrzeugboden zeichnet sich dabei dadurch aus, dass er eine einfache und problemlose Anbindung herkömmlicher Fahrzeugsitze ermöglicht, nachdem die Fahrzeugsitzaufnahme anstelle anderer Aufnahmen am Fahrzeugboden angeordnet ist. Eine Anpassung des Fahrzeugbodens oder Fahrzeugsitzes aufgrund der Verwendung der Fahrzeugsitzaufnahmen kann somit unterbleiben.

Die Anordnung der Fahrzeugsitzaufnahmen kann dabei in Abhängigkeit der anzuordnenden Fahrzeugsitze in geeigneter Form am Fahrzeugboden erfolgen. Besonders vorteilhafterweise ist die Fahrzeugsitzaufnahme jedoch im Bereich von Längs- und/oder Querträgern des Fahrzeugbodens angeordnet. Durch diese Ausgestaltung der Erfindung lässt sich die Fahrzeugsitzaufnahme besonders zuverlässig mit dem Fahrzeugboden verbinden, da der Fahrzeugboden im Bereich der Längs- und/oder Querträger eine besonders hohe Festigkeit aufweist. Zudem steht im Bereich der Längs- und/oder Querträger ein in Fahrzeughochachse betrachtet höherer Bauraum zur Verfügung, der es ermöglicht, die Fahrzeugsitzaufnahme, wie nach einer vorteilhaften Weiterbildung der Erfindung vorgesehen, in den Fahrzeugboden integriert anzuordnen.

Hierdurch lässt sich eine Ausgestaltung des Fahrzeugbodens realisieren, bei dem der Aufnahmekörper im Wesentlichen in einer Ebene mit einer den Fahrzeugsitz zugewandten Oberfläche des Fahrzeugbodens angeordnet ist, so dass sich der Fahrzeugsitz besonders flach am Fahrzeugboden montieren lässt. Nachdem bei einer entsprechenden Ausgestaltung der Erfindung für den Monteur darüber hinaus nicht unmittelbar erkennbar ist, dass der Fahrzeugsitz nicht an einer starren Aufnahme am Fahrzeugboden, sondern an einem Aufnahmekörper einer Fahrzeugsitzaufnahme angeordnet ist, erübrigen sich auch unter Umständen erforderliche Einbauhinweise, da der Einbau in herkömmlicher Weise erfolgen kann.

Nach einer besonders vorteilhaften Ausgestaltung der Erfindung ist im vorderen Fahrzeugsitzbereich eine Fahrzeugsitzaufnahme angeordnet, die bei einer Aktivierung der Fahrzeugsitzaufnahme eine Absenkung des Fahrzeugsitzes bewirkt. Nach einer weiteren Ausgestaltung der Erfindung ist im hinteren Fahrzeugsitzbereich eine Fahrzeugsitzaufnahme angeordnet, die derart ausgebildet ist, dass eine Aktivierung der Fahrzeugsitzaufnahme eine Anhebung des Fahrzeugsitzes bewirkt. Besonders bevorzugt ist im vorderen Fahrzeugsitzbereich eine Fahrzeugsitzaufnahme angeordnet, die bei einer Aktivierung der Fahrzeugsitzaufnahme eine Absenkung des Fahrzeugsitzes bewirkt und im hinteren Fahrzeugsitzbereich eine Fahrzeugsitzaufnahme angeordnet, die derart ausgebildet ist, dass eine Aktivierung der Fahrzeugsitzaufnahme eine Anhebung des Fahrzeugsitzes bewirkt.

Nach einer Weiterbildung der Erfindung ist vorgesehen, dass alle zur Anbindung verwendeten Fahrzeugsitzaufnahmen wahlweise sowohl ein Anheben als auch ein Absenken ermöglichen, wobei die Verstellbewegung letztlich durch die Ansteuerung der Fahrzeugsitzaufnahmen festgelegt wird.

Ausführungsbeispiele der Erfindung werden nachstehend mit Bezug auf die Zeichnungen dargestellt. In den Zeichnungen zeigen:
- Fig. 1: eine schematische Darstellung einer ersten Ausführungsform einer Fahrzeugsitzaufnahme;
- Fig. 2a: eine schematische Darstellung einer perspektivischen Ansicht einer zweiten Ausführungsform einer Fahrzeugsitzaufnahme;
- Fig. 2b: eine schematische Darstellung einer Draufsicht auf die Fahrzeugsitzaufnahme von Fig. 2a;
- Fig. 3: eine schematische Darstellung einer dritten Ausführungsform einer Fahrzeugsitzaufnahme und
- Fig. 4: eine schematische Darstellung einer vierten Ausführungsform einer Fahrzeugsitzaufnahme.

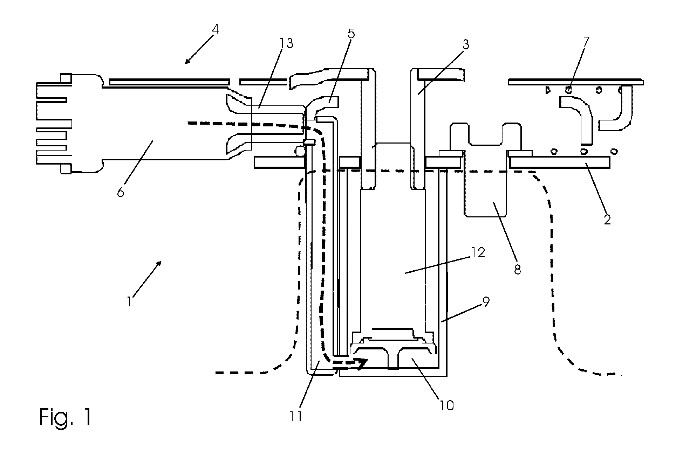

Die in Fig. 1 dargestellte Fahrzeugsitzaufnahme 1 weist einen Grundkörper 2 auf. Der Grundkörper 2 weist eine Öffnung zur Aufnahme einer Schraube 8 auf, mittels der die Fahrzeugsitzaufnahme 1 mit dem Fahrzeugboden verbunden wird. Die Anbindung des Fahrzeugsitzes über bspw. eine hier nicht dargestellte, durch eine Sitzunterschiene hindurchragende Schraube erfolgt an dem Aufnahmekörper 3, welcher mit einem verschiebbar in einer an dem Grundkörper 2 angeordneten Hülse 9 gelagerten Kolben 12 verbunden ist.

Nach Aktivierung eines pyrotechnischen Aktuators 6 einer Verstelleinheit 4 der Fahrzeugsitzaufnahme 1 bewirkt ein gegenüber dem Aktuator 6 verstellbares Betätigungselements 13 eine Verlagerung eines Sperrelements 5 aus einer hier nicht dargestellten Sperrlage in die in Fig. 1 dargestellte Freigabelage. Das aus dem Aktuator 6 austretende Gas wird über einen Gaskanal 11 in einen unterhalb des Kolbens 12 angeordneten Druckraum 10 geleitet, wobei sich durch die im Druckraum 10 einstellende Druckerhöhung eine Verlagerung des Kolbens 12 sowie des mit dem Kolben 12 verbundenen Aufnahmekörpers 3 ergibt. Dadurch wird der Aufnahmekörper 3 und ein mit dem Aufnahmekörper 3 verbundener Sitz verlagert. Eine im Bereich der Fahrzeugsitzaufnahme 1 dem pyrotechnischen Aktuator 6 gegenüberliegend angeordnete Schraubendruckfeder 7 sichert die Lage des Sperrelements 5 in der Normallage.

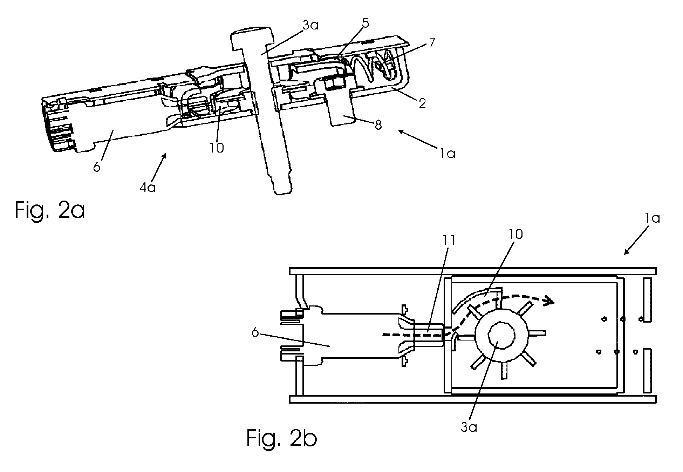

In einer zweiten in den Fig. 2a und 2b dargestellten Ausführungsform wird durch die Verstelleinheit 4a der Fahrzeugsitzaufnahme 1a das sich expandierende Gas im Gegensatz zu der in Fig. 1 dargestellten Ausführungsform nicht in einen unterhalb eines Kolbens 12 angeordneten Druckraum 10, sondern in ein koaxial zum Aufnahmekörper 3a angeordneten Druckraum 10 geleitet, wobei das expandierende Gas auf sich radial vom Aufnahmekörper 3 erstreckende Flügel wirkt, so dass der Aufnahmekörper 3a in Rotation versetzt wird, wodurch der Aufnahmekörper 3a in einer Schraubbewegung aus einer Normallage in die Crashlage verstellt wird.

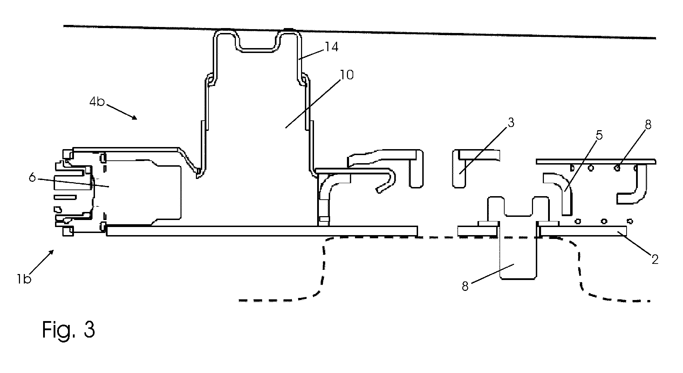

Bei der in Fig. 3 dargestellten Ausführungsform einer Fahrzeugsitzaufnahme 1b wirkt die durch Aktivierung des pyrotechnischen Aktuators 6 erzeugte Druckerhöhung auf ein innerhalb eines Teleskoprohres 14 angeordneten Druckraum 10, wodurch das Teleskoprohr 14 aufgestellt wird. Im Rahmen der Aufstellbewegung greift ein Ende des Teleskoprohres 14 an einer Unterkante einer Sitzschiene an und verstellt hierüber den Fahrzeugsitz aus einer Normallage in die Crashlage.

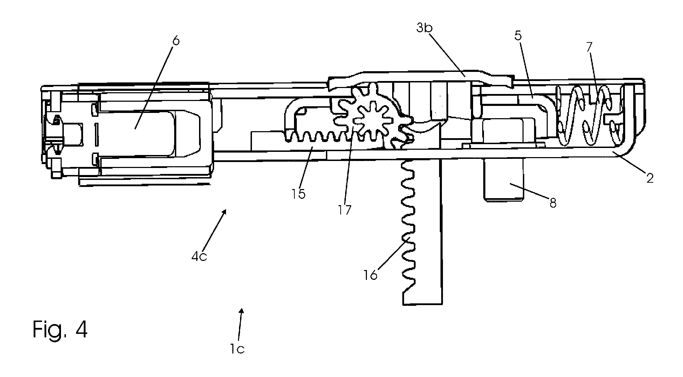

In der in Fig. 4 dargestellten Fahrzeugsitzaufnahme 1c bewirkt eine Aktivierung des pyrotechnischen Aktuators 6 eine Verlagerung der Zahnstange 15 in Richtung auf die die Lage des Sperrelements 5 in der Normallage sichernde Schraubendruckfeder 7. Infolge der Verlagerung der Zahnstange 15 erfolgt eine Verdrehung eines mit der Zahnstange 15 und einer Verzahnung 16 an dem Aufnahmekörper 3b in Eingriff befindlichen Zahnrades 17 derart, dass der Aufnahmekörper 3b aus der in Fig. 4 dargestellten Normallage in die nicht dargestellte Crashlage aufgestellt wird.

## Patentansprüche

1. Fahrzeugsitzaufnahme, mit
- einem mit einem Fahrzeugboden verbindbaren Grundkörper (2) und
- einem mit einem Fahrzeugsitz, insbesondere einem Schienenpaar eines Fahrzeugsitzes, bevorzugt einer Bodenschiene eines Fahrzeugsitzes verbindbaren Aufnahmekörper,
- wobei der Aufnahmekörper (3, 3a, 3b) in einer Normallage relativ gegenüber dem Grundkörper lösbar festgelegt ist,
**dadurch gekennzeichnet, dass** eine Verstelleinheit (4, 4a, 4b, 4c) derart ausgebildet und angeordnet ist, dass eine Aktivierung der Verstelleinheit (4, 4a, 4b, 4c) eine Verlagerung des Aufnahmekörpers (3, 3a, 3b) relativ gegenüber dem Grundkörper (2) in Richtung auf eine Crashlage bewirkt.

2. Fahrzeugsitzaufnahme nach Anspruch 1, **dadurch gekennzeichnet, dass** der Aufnahmekörper (3, 3a, 3b) in der Normallage über eine kraft- und/oder formschlüssig wirkende Verbindung an dem Grundkörper (2) festgelegt ist.

3. Fahrzeugsitzaufnahme nach Anspruch 1 oder 2, **dadurch gekennzeichnet, dass** in der Normallage ein verlagerbares, mit dem Aufnahmekörper (3, 3a, 3b) und dem Grundkörper (2) in Eingriff befindliches Sperrelement (5) die Position des Aufnahmekörpers (3, 3a, 3b) gegenüber dem Grundkörper (2) sichert.

4. Fahrzeugsitzaufnahme nach einem der vorhergehenden Ansprüche, **dadurch gekennzeichnet, dass** der Aufnahmekörper (3, 3a, 3b) in der Normallage in Richtung auf die Crashlage vorgespannt ist.

5. Fahrzeugsitzaufnahme nach Anspruch 3, **dadurch gekennzeichnet, dass** die Verstelleinheit (4, 4a, 4b, 4c) eine elektromagnetisch und/oder pyrotechnisch wirkende Betätigungseinheit aufweist, mittels der das Sperrelement (5) mit dem Grundkörper (2) und/oder dem Aufnahmekörper (3, 3a, 3b) außer Eingriff bringbar ist.

6. Fahrzeugsitzaufnahme nach einem der vorhergehenden Ansprüche, **dadurch gekennzeichnet, dass** die Verstelleinheit (4, 4a, 4b, 4c) einen pyrotechnisch wirkenden Aktuator (6) aufweist, wobei eine Aktivierung des Aktuators (6) aufgrund einer sich in einem Arbeitsraum (10) einstellenden Druckerhöhung eine Verlagerung des Aufnahmekörpers (3, 3a, 3b) gegenüber dem Grundkörper (2) bewirkt.

7. Fahrzeugsitzaufnahme nach Anspruch 6, **dadurch gekennzeichnet, dass** der pyrotechnische Aktuator (6) das Sperrelement (5) mit dem Grundkörper (2) und/oder dem Aufnahmekörper (3, 3a, 3b) außer Eingriff bringt.

8. Fahrzeugsitzaufnahme nach einem der vorhergehenden Ansprüche, **dadurch gekennzeichnet, dass** der in Richtung auf die Crashlage verlagerte Aufnahmekörper (3, 3a, 3b) unter elastischer und/oder plastischer Verformung eines Absorptionselements in Richtung auf die Normallage verlagerbar ist.

9. Fahrzeugsitzaufnahme nach einem der vorhergehenden Ansprüche, **dadurch gekennzeichnet, dass** der Grundkörper (2) durch eine an einem Fahrzeugboden anordbare Hülse (9) und der Aufnahmekörper (3, 3a, 3b) durch ein gegenüber der Hülse (9) verlagerbares Verbindungselement, insbesondere ein Kolbenelement (12) gebildet ist.

10. Fahrzeugsitzaufnahme nach einem der vorhergehenden Ansprüche, **dadurch gekennzeichnet, dass** die Verbindung des Aufnahmekörpers (3, 3a, 3b) mit dem Grundkörper (2) derart ausgebildet ist, dass der in Richtung auf die Crashlage verschobene Aufnahmekörper (3, 3a, 3b) gegen eine Rückverlagerung in Richtung auf die Normallage gesichert ist.

11. Fahrzeugboden mit Mitteln zur Befestigung eines Fahrzeugsitzes, **dadurch gekennzeichnet, dass** die Mittel durch eine Fahrzeugsitzaufnahme (1, la, ib, ic) gemäß einem der Ansprüche 1 bis 10 gebildet sind.

12. Fahrzeugboden nach Anspruch 11, **dadurch gekennzeichnet, dass** die Fahrzeugsitz aufnahme (1, la, 1b, 1c) im Bereich von Längs- und/oder Querträgern des Fahrzeugbodens angeordnet sind.

13. Fahrzeugboden nach Anspruch 11 oder 12, **dadurch gekennzeichnet, dass** die Fahrzeugsitzaufnahme (1, la, 1b, 1c) in den Fahrzeugboden integriert ist.

14. Fahrzeugboden nach einem der Ansprüche 11 bis 13, **dadurch gekennzeichnet, dass** eine im vorderen Fahrzeugsitzbereich angeordnete Fahrzeugsitzaufnahme (1, la, 1b, 1c) derart ausgebildet ist, dass eine Aktivierung der Fahrzeugsitzaufnahme (1, la, 1b, 1c) eine Absenkung des Fahrzeugsitzes bewirkt.

15. Fahrzeugboden nach einem der Ansprüche 11 bis 14, **dadurch gekennzeichnet, dass** eine im hinteren Fahrzeugsitzbereich angeordnete Fahrzeugsitzaufnahme (1, la, 1b, 1c) derart ausgebildet ist, dass eine Aktivierung der Fahrzeugsitzaufnahme (1, la, 1b, 1c) eine Anhebung des Fahrzeugsitzes bewirkt.

## Claims

1. A vehicle seat holder, with
- a main body (2) connectable to the vehicle floor, and
- a holder body connectable to a vehicle seat, especially a rail pair of a vehicle seat, preferably a floor rail of a vehicle seat,
- wherein the holder body (3, 3a, 3b) is releasably fixed in a normal position relative to the main body,
**characterized in that** an adjusting unit (4, 4a, 4b, 4c) is designed and arranged such that activating the adjusting unit (4, 4a, 4b, 4c) causes a displacement of the holder body (3, 3a, 3b) relative to the main body (2) in the direction of a crash position.

2. The vehicle seat holder according to claim 1, **characterized in that** the holder body (3, 3a, 3b) is fixed in the normal position by means of a friction-locked and/or form-fit connection to the main body (2).

3. The vehicle seat holder according to claim 1 or 2, **characterized in that** in the normal position, a displaceable locking element (5) engaged with the holder body (3, 3a, 3b) and the main body (2) secures the position of the holder body (3, 3a, 3b) relative to the main body (2).

4. The vehicle seat holder according to one of the preceding claims, **characterized in that** the holder body (3, 3a, 3b) is pretensioned in the normal position in the direction of the crash position.

5. The vehicle seat holder according to claim 3, **characterized in that** the adjusting unit (4, 4a, 4b, 4c) has an electromagnetically and/or pyrotechnically operating actuating unit by means of which the locking element (5) can be disengaged from the main body (2) and/or the holder body (3, 3a, 3b).

6. The vehicle seat holder according to one of the preceding claims, **characterized in that** the adjusting unit (4, 4a, 4b, 4c) has a pyrotechnically operating actuator (6), wherein an activation of the actuator (6) caused by an increase in pressure arising within an operating chamber (10) causes a displacement of the holder body (3, 3a, 3b) relative to the main body (2).

7. The vehicle seat holder according to claim 6, **characterized in that** the pyrotechnical actuator (6) causes the locking element (5) to disengage from the main body (2) and/or the holder body (3, 3a, 3b).

8. The vehicle seat holder according to one of the preceding claims, **characterized in that** the holder body (3, 3a, 3b) displaced toward the crash position is displaceable toward the normal position with elastic and/or plastic deformation of an absorption element.

9. The vehicle seat holder according to one of the preceding claims, **characterized in that** the main body (2) is formed by a sleeve (9) arrangeable on a vehicle floor, and the holder body (3, 3a, 3b) is formed by a connecting element, especially a piston element (12), displaceable relative to the sleeve (9).

10. The vehicle seat holder according to one of the preceding claims, **characterized in that** the connection of the holder body (3, 3a, 3b) to the main body (2) is configured such that the holder body (3, 3a, 3b) shifted toward the crash position is secured against shifting back toward the normal position.

11. A vehicle floor with means for attaching a vehicle seat, **characterized in that** the means are formed by a vehicle seat holder (1, la, ib, ic) according to one of the claims 1 to 10.

12. The vehicle floor according to claim 11, **characterized in that** the vehicle seat holder (1, la, lb, lc) is arranged in the area of longitudinal and/or transverse members of the vehicle floor.

13. The vehicle floor according to claim 11 or 12, **characterized in that** the vehicle seat holder (1, la, lb, lc) is integrated in the vehicle floor.

14. The vehicle floor according to one of the claims 11 to 13, **characterized in that** a vehicle seat holder (1, la, 1b, 1c) arranged in the front vehicle seat area is designed such that activating the vehicle seat holder (1, la, 1b, 1c) causes the vehicle seat to lower.

15. The vehicle floor according to one of the claims 11 to 14, **characterized in that** a vehicle seat holder (1, 1a, 1b, 1c) arranged in the rear vehicle seat area is designed such that activating the vehicle seat holder (1, 1a, 1b, 1c) causes the vehicle seat to rise.

## Revendications

1. Réception de siège de véhicule, avec
- un corps de base (2) pouvant être raccordé à un plancher de véhicule, et
- un corps de réception pouvant être raccordé à un siège de véhicule, en particulier à une paire de rails d'un siège de véhicule, de préférence à un rail de plancher d'un siège de véhicule,
- le corps de réception (3, 3a, 3b) étant immobilisé de façon détachable dans une position normale de façon relative par rapport au corps de base,
**caractérisée en ce qu'**une unité de réglage (4, 4a, 4b, 4c) est constituée et disposée de telle sorte qu'une activation de l'unité de réglage (4, 4a, 4b, 4c) entraîne un déplacement du corps de réception (3, 3a, 3b) de façon relative par rapport au corps de base (2) en direction d'une position de crash.

2. Réception de siège de véhicule selon la revendication 1, **caractérisée en ce que** le corps de réception (3, 3a, 3b) est immobilisé dans la position normale par le biais d'un raccordement au corps de base (2) agissant par le biais d'une liaison de force et/ou de forme.

3. Réception de siège de véhicule selon la revendication 1 ou 2, **caractérisée en ce que**, dans la position normale, un élément de blocage (5) déplaçable qui est en prise avec le corps de réception (3, 3a, 3b) et avec le corps de base (2) bloque la position du corps de réception (3, 3a, 3b) par rapport au corps de base (2).

4. Réception de siège de véhicule selon une des revendications précédentes, **caractérisée en ce que** le corps de réception (3, 3a, 3b), dans la position normale, est prétendu dans la direction de la position de crash.

5. Réception de siège de véhicule selon la revendication 3, **caractérisée en ce que** l'unité de réglage (4, 4a, 4b, 4c) présente une unité d'actionnement à action électromagnétique et/ou pyrotechnique au moyen de laquelle l'élément de blocage (5) peut être désengagé du corps de base (2) et/ou du corps de réception (3, 3a, 3b).

6. Réception de siège de véhicule selon une des revendications précédentes, **caractérisée en ce que** l'unité de réglage (4, 4a, 4b, 4c) présente un actionneur (6) à action pyrotechnique, une activation de l'actionneur (6) provoquant, en raison d'une augmentation de pression qui s'établit dans un espace de travail (10), un déplacement du corps de réception (3, 3a, 3b) par rapport au corps de base (2).

7. Réception de siège de véhicule selon la revendication 6, **caractérisée en ce que** l'actionneur (6) pyrotechnique désengage l'élément de blocage (5) par rapport au corps de base (2) et/ou au corps de réception (3, 3a, 3b).

8. Réception de siège de véhicule selon une des revendications précédentes, **caractérisée en ce que** le corps de réception (3, 3a, 3b) déplacé en direction de la position de crash est déplaçable en direction de la position normale avec une déformation élastique et/ou plastique d'un élément d'absorption.

9. Réception de siège de véhicule selon une des revendications précédentes, **caractérisée en ce que** le corps de base (2) est formé d'une douille (9) pouvant être disposée sur un plancher de véhicule, et le corps de réception (3, 3a, 3b) est formé d'un élément de raccordement déplaçable par rapport à la douille (9), en particulier un élément à piston (12).

10. Réception de siège de véhicule selon une des revendications précédentes, **caractérisée en ce que** le raccordement du corps de réception (3, 3a, 3b) avec le corps de base (2) est constitué de telle sorte que le corps de réception (3, 3a, 3b) poussé en direction de la position de crash est bloqué contre un déplacement en retour en direction de la position normale.

11. Plancher de véhicule avec des moyens de fixation d'un siège de véhicule, **caractérisé en ce que** les moyens sont formés d'une réception de siège de véhicule (1, la, ib, ic) selon une des revendications 1 à 10.

12. Plancher de véhicule selon la revendication 11, **caractérisé en ce que** la réception de siège de véhicule (1, 1a, 1b, 1c) est disposée dans la zone de supports longitudinaux et/ou transversaux du plancher de véhicule.

13. Plancher de véhicule selon la revendication 11 ou 12, **caractérisé en ce que** la réception de siège de véhicule (1, 1a, 1b, 1c) est intégrée dans le plancher de véhicule.

14. Plancher de véhicule selon une des revendications 11 à 13, **caractérisé en ce qu'**une réception de siège de véhicule (1, 1a, 1b, 1c) disposée dans la zone avant de siège de véhicule est constituée de telle sorte qu'une activation de la réception de siège de véhicule (1, 1a, 1b, 1c) provoque un abaissement du siège de véhicule.

15. Plancher de véhicule selon une des revendications 11 à 14, **caractérisé en ce qu'**une réception de siège de véhicule (1, 1a, 1b, 1c) disposée dans la zone arrière de siège de véhicule est constituée de telle sorte qu'une activation de la réception de siège de véhicule (1, 1a, 1b, 1c) provoque une élévation du siège de véhicule.
